(19) Europäisches Patentamt European Patent Office Office européen des brevets

(11) **EP 4 323 571 B1**

(12) **EUROPEAN PATENT SPECIFICATION**

(45) Date of publication and mention of the grant of the patent:
**12.02.2025 Bulletin 2025/07**

(21) Application number: **22721463.2**

(22) Date of filing: **11.04.2022**

(51) International Patent Classification (IPC):
**D04H 1/4274** (2012.01)   **D04H 1/4266** (2012.01)
**D04H 1/46** (2012.01)   **D04H 1/48** (2012.01)

(52) Cooperative Patent Classification (CPC):
**D04H 1/4274; D04H 1/4266; D04H 1/46;**
**D04H 1/48;** Y02W 30/66

(86) International application number:
**PCT/IB2022/053351**

(87) International publication number:
**WO 2022/219484 (20.10.2022 Gazette 2022/42)**

(54) **DRY METHODS FOR PRODUCING A NONWOVEN FABRIC FROM TANNED LEATHER WASTE**

TROCKENVERFAHREN ZUR HERSTELLUNG EINES VLIESSTOFFES AUS GEGERBTEM LEDERABFALL

PROCÉDÉS À SEC POUR PRODUIRE UN NON TISSÉ À PARTIR DE DÉCHETS DE CUIR TANNÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2021   IT 202100009206**

(43) Date of publication of application:
**21.02.2024   Bulletin 2024/08**

(73) Proprietor: **Chiorino Technology S.p.A.**
**20121 Milano (IT)**

(72) Inventors:
• **MASI, Maurizio**
**20124 Milano (IT)**
• **TOSCANO, Marco**
**27029 Vigevano (Pavia) (IT)**

(74) Representative: **Vanzini, Christian et al**
**Jacobacci & Partners S.p.A.**
**Corso Emilia 8**
**10152 Torino (IT)**

(56) References cited:
EP-A2- 0 089 029      CN-A- 104 862 983
CN-A- 107 574 677      CN-A- 109 137 258
GB-A- 1 302 001      US-A1- 2004 149 369
US-A1- 2015 292 148

**Description**

The present invention relates generally to technologies for recovering processing scraps from leathers and hides.

Many scraps from the processing of leathers and hides, as well as those, much more relevant, from post-consumer material, currently do not find an application that enhances the content of valuable material of natural/animal origin.

Particularly valuable is the material that has already undergone the tanning treatment as it is no longer putrescible. Tanning, in fact, confers great stability to animal hides, far beyond the normal duration of a human lifespan.

Given the difficult workability of these scraps in the leather sector, especially those of post-consumer waste, due to the fact that they come in the most diverse shapes and sizes, the recycling processes for these scraps today are all based on their digestion by alkaline or acid hydrolysis, with the aim of recovering the collagen they contain (animal skin is a porous network of collagen fibers called fibrils).

Although the hydrolytic process is not in itself complex to carry out, the content of the tanning element (in most cases trivalent chromium), on the order of 20,000 ppm, often does not allow a direct use of the collagen thus recovered in the noblest uses, which are those of the food and pharmaceutical/nutraceutical sector. Removing the chromium from these matrices is not easy, as it is strongly bonded to the collagen fibers themselves. The stability of this bond is in fact at the origin of the great stability of tanned leather over time. Therefore, even with extraction and precipitation mechanisms, the residual chromium is such that, in effect, the only real use of this collagen waste is as an agricultural soil conditioner. However, even this use, with the spread of conservation agriculture, is increasingly limited in Europe. Thus it is a product of low value, if any.

In the textile field, the idea of making non-woven fabric (hereafter NWF) from leather scraps has been proposed. In particular, many known solutions are based on generating fibers by tearing leathers.

CN102587037 and CN108691095, US2004149369A1, US2015292148A1, in addition to carding and needling operations, provide for the NWF to be impregnated with polymeric resins which therefore constitute the predominant part of the NWF mass. EP0089029, on the other hand, makes NWF from the direct dispersion in liquid phase of collagen-based fibers. CH573980 produces the NWF from the dispersion of fibers in an aqueous medium and the deposition thereof on a support fabric and subsequent adhesion by drying.

CN104862983 envisages leather fibers produced by carding which are then sprayed onto a non-woven film and then bonded to the non-woven film by hot pressing.

CN105177786 is specifically dedicated to obtaining collagen fibers by a chemical pretreatment for tearing the matrix before sending it to the carding machine.

CN107574677 claims the production of a laminated material where the carded felt is alternated with layers of polyurethane then joined by hot pressing under vacuum with the aim of producing a product similar to the original leather, i.e., a regenerated leather. With a different process, but with the same ultimate goal, CN109137258 may also be considered in this typology. These are all solutions inspired by US2543101 where the fibers obtained by tearing the leather are placed on an adhesive film or one that behaves as such when hot.

FR2551773 describes a procedure dedicated to producing a felt-looking NWF where collagen-based fibers are combined with other fibers for textile use. In order to obtain a product with an acceptable consistency, the addition of collagen fibers is limited to a maximum of 50%, preferably around 20%. The method involves the use of polymeric resins to make the matrix more compact and resistant.

GB1302001 requires carding and needling operations to be performed after impregnation with oil. The material obtained in this way does not have high mechanical features and for this reason it is intended for use as filling or insulating material. To obtain a non-woven fabric, impregnation with polymer latices is required, followed by drying and calendering.

One object of the present invention is to provide a non-woven fabric based on tanned leather fibers that exhibits sufficient mechanical properties without requiring the presence of chemical impregnating agents or binders.

This object is achieved according to the invention by a dry method for manufacturing a non-woven fabric from tanned leather waste, comprising the following steps:

providing tanned leather scraps in the form of compact material,
subjecting the scraps to opening in order to tear the compact material into fiber,
subjecting the torn material to carding, wherein textile fibers are added during carding to obtain a web of mixed fibers, said textile fibers including wool fibers, and
subjecting the web to needling to obtain a felt, wherein the mixed fiber web is free of impregnating agents and comprises a leather fiber component composed of tanned leather fibers having a diameter of between 4 μm and 70 μm and a length of between 4 mm and 20 mm, wherein the leather fiber component is comprised in a weight percentage greater than or equal to 50% of the total weight of the fibers in the fiber web, and preferably between 70% and 80% by weight.

It is also an object of the invention to provide a dry method for manufacturing a non-woven fabric from tanned leather scraps, comprising the following steps

providing tanned leather scraps in the form of compact material,
subjecting the scraps to opening in order to tear the compact material into fiber,
subjecting the torn material to carding, wherein textile fibers are added during carding to obtain a web of mixed fibers, said textile fibers including wool fibers and polyester or polyamide fibers, and
subjecting the web to heat treatment in an oven to obtain a wadding, wherein the mixed fiber web is free of impregnating agents and comprises a leather fiber component composed of tanned leather fibers having a diameter of between 4 $\mu$m and 70 $\mu$m and a length of between 4 mm and 20 mm, wherein the leather fiber component is comprised in a weight percentage greater than or equal to 50% of the total weight of the fibers in the fiber web, and preferably between 70% and 80% by weight.

With the present invention, it is possible to obtain a non-woven fabric having a high content of collagen fibers derived from scraps of leather, with a porous structure, which owes its mechanical properties to the particular dimensions of the leather fibers. No impregnating agents are used in the preparation of the non-woven fabric, and therefore the whole process and the finished product are characterized by a low environmental impact. In addition, the textile support fibers, both natural and artificial, are preferentially recycled so as to qualify the finished product as a product that respects the dictates of the circular economy.

In particular, wool is used as the textile support fiber. Wool has a keratin (polypeptide chain) structure that makes it strongly compatible with that of the leather (also keratin and polypeptide chain). This compatibility is also evident during blending, as well as during the formation of the fiber layer arranged for mechanical needling.

In addition, collagen fibers, due to their PG/GAG (proteoglycans/glucosaminoglycans) coating, possess biosensor and bioconductor properties: the relative electrical charges result in a greater ability to bind water and exchange ions and thus a greater electrical capacity. Therefore, in the case of a mixture of wool fibers and leather fibrils, the relative electrostatic charge of the two materials facilitates their cohesion during the formation of the pre-needling web, which also helps to retain the micro-fibrils (less than 2 mm long), with a reduction in production waste.

The wool, in a dosage varying from 10% to 30%, determines the softness component of the felt, contrasting decisively with the structural and amorphous rigidity of the leather fibers and the even higher rigidity of polyester fibers.

The wool fiber used in mixture with leather fibers allows the formation of a web with a high presence of air, therefore characterized by a very low density, while facilitating the cohesion of the fibers even during needling. It is, therefore, essential to obtain felts characterized by high porosity and a corresponding low specific weight. This peculiarity makes the felt thus obtained suitable for use in applications that require the features of lightness, breathability, and thermal and acoustic insulation.

In addition, the "hand" of the finished product may be adjusted through the wool content. The addition of a variable percentage of thermoplastic fiber (polyester or co-polyester) may serve to increase the mechanical properties (tensile and tear strength) and make the felt thermoformable.

Uniquely due to the use of wool, the web formed by the carding operation, in carefully measured percentages of leather, wool, and polyester, if not subject to needling and subjected to a simple heat treatment, has features of lightness and resilience such as to form an article to replace wadding for lining and padding operations.

Further features and advantages of the methods according to the invention will become apparent from the following detailed description of an embodiment of the invention, made with reference to the accompanying drawings, provided for purely illustrative and nonlimiting purposes only, wherein:

- Fig. 1 is a block diagram representing a process for producing a non-woven fabric according to the invention;
- Fig. 2 shows two photographs taken with an optical microscope of the fibers obtained after the opening process. The scale of both photographs is 2 mm; the fibers obtained from defibrating the leather matrix have diameters between 4 and 70 microns, an irregular cross-section, and lengths between 4 and 20 mm;
- Fig. 3 shows two photographs taken with a scanning microscope of the three-dimensional structure of the non-woven fabric produced. In the left pane the graphic scale is 20 $\mu$m, and in the right pane it is 100 $\mu$m;
- Fig. 4 and 5 are graphs showing trends in the product properties of tenacity, resilience, and hand softness of non-woven fabric as the wool and polyester fiber content changes; and
- Fig. 6 is a block diagram representing a second process for producing a non-woven fabric according to the invention.

The present invention relates to a non-woven fabric, particularly having a highly porous structure that causes it to be referred to as a felt. The non-woven fabrics with felt structure are products of the textile industry currently used in many applications, both as filling and support materials, and for manufacturing many objects such as hats and bags, jewelry, trimmings for clothes on silk, footwear, which with the use of colors and designs of modern taste become fashion items.

Therefore, non-woven fabrics made from fibers generated from leather scraps may be used, non-exhaustively, in all of the previously cited applications. In addition to creating a new material and product on the market, it has the advantage of originating from waste material, making it a valuable recycled product. It is therefore a product that allows the dictates of the circular economy to be respected without the use of chemicals. Thus, it is a true product of the "green economy."

Non-woven fabric (NWF) is the generic term for an industrial product similar to fabric, but obtained with methods other than weaving (crossing warp and weft threads on a loom) and knitting. Therefore, in a non-woven fabric, the fibers present a random pattern, without identification of any ordered structure, whereas in a woven fabric, the fibers present two prevailing and orthogonal directions between them (warp and weft). Manufacturing typically uses layered or crisscrossed fibers that are joined together mechanically (e.g., with needles), with adhesives, or with thermal processes.

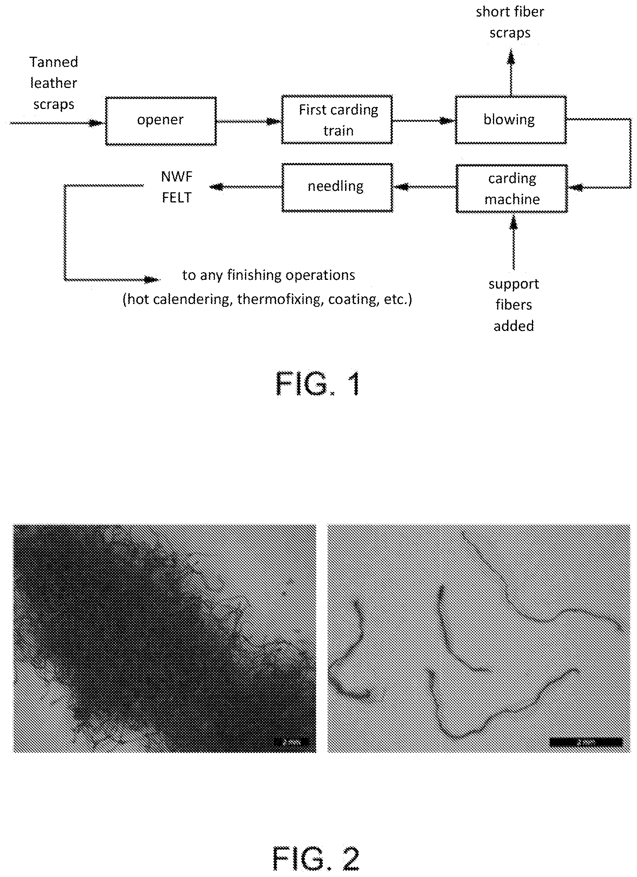

The schematic of the manufacturing process of a non-woven fabric according to the invention is illustrated in Fig. 1.

Generally speaking, the production process of an NWF based on tanned leather scraps provides for a first step of mechanical opening of the continuous matrix generating the first raw fibers and at least one mechanical carding followed by needling. Air-blowing may be envisaged to eliminate residues of out-of-specification size or unwanted materials immediately after the carding process.

The opening of the fibers from the matrix of tanned and finished leather is achieved with special machines called "openers" that must generate fibers with as suitable a ratio between length and diameter as possible, avoiding tearing. Fibers of small length, with a powdery nature, are not in fact suitable for the subsequent processing required for making the felt. The openers may operate either dry or wet. Typically wet operation produces longer fibers.

The fibrous fragments generated are then fed to a fine opener, which homogenizes the load of leather fibers and other necessary fibers. In fact, the torn fibers obtained from the opening of the leather scraps, in order to increase their mechanical features, are usually mixed with natural fibers, such as wool, silk, cotton or linen, and/or synthetic fibers, such as polyamides or polyester.

Mechanical carding is an operation that refines the first torn fibers obtained in the openers, producing fibers of various short to medium lengths (preferably between 4 and 20 mm) and with a diameter between 4 and 70 microns. The passage between the different rollers of the carding machine, in addition to tearing the homogeneous matrix of the tanned leather, untangles and aligns the fibers in order to prepare them for subsequent processing and, if necessary, creates a close blending with the synthetic or natural fibers added to increase the mechanical properties of the final NWF.

Needling is the process by which, by means of vertical, and/or also horizontal movement, if required, an elliptical movement of the needles is achieved, and compactness is conferred on the fiber mat obtained at the exit of the carding machine by superimposing several layers of web. The result is therefore a needled, non-woven fabric (NWF) provided with a certain consistency due to the penetration of a part of the fibers dragged vertically by the motion of the needles.

The felt thus obtained may be subjected to finishing processes, e.g., hot calendering, and subsequent dyeing.

The result is a porous NWF, preferably made from all recycled materials, with a prevalent fiber composition obtained from tanned leather scraps and from scraps of finished leather products, which is capable of being self-supporting (i.e. in the absence of a support fabric) and without using polymeric impregnating agents. It is thus a product with a low environmental impact.

In particular, it is possible to obtain a felt with a tensile strength (measured according to UNI EN ISO 3376) greater than 8 N/mm$^2$, as well as a single tear strength (measured according to UNI EN ISO 3377/1) greater than 15 N.

As mentioned above, the tanned leather scraps are opened by a special opener, which generates fibrous fragments while preserving a minimum size, and are then fed to a fine opener, which homogenizes the load of leather fibers and other necessary fibers.

No chemical additives are added at this stage and the process is conducted on a dry basis. The appearance of the fiber produced may be seen in Fig. 2.

The fibers that lend themselves to further processing for the production of porous non-woven fabric with felt product features have lengths greater than 4 mm and diameters greater than 4 microns.

Once the tanned leather fibers are obtained, textile support fibers are added to obtain a non-woven fabric with comparatively better mechanical properties. In particular, wool fibers are added. Artificial fibers such as polyamide fibers (e.g., nylon 6, nylon 66, nylon 12, etc.) or polyester (PET, PLA, PCL, etc.) may also be added. With a view to making a product that respects the dictates of the circular economy, recycled fiber waste is also used for the textile support fibers.

Once the desired blend has been obtained, where the fibers obtained from tearing tanned leather scraps always make up more than 50% of the blend, preferably around 70-80%, the homogeneous blend then feeds a carding machine that distributes the fibers appropriately, combining a mechanical action and a pneumatic deposition phase.

The so-called felt mat that is generated does not have sufficient mechanical properties. These are obtained by subjecting it to a needling process with specially selected metallic needles suitable for working the fibers concerned, which gives said mat a three-dimensional structure. The density and salient properties of the felt generated depend on the modulation of the feed belt, the weight of the distributed fiber, its composition, and the intensity of the action of the needling machine.

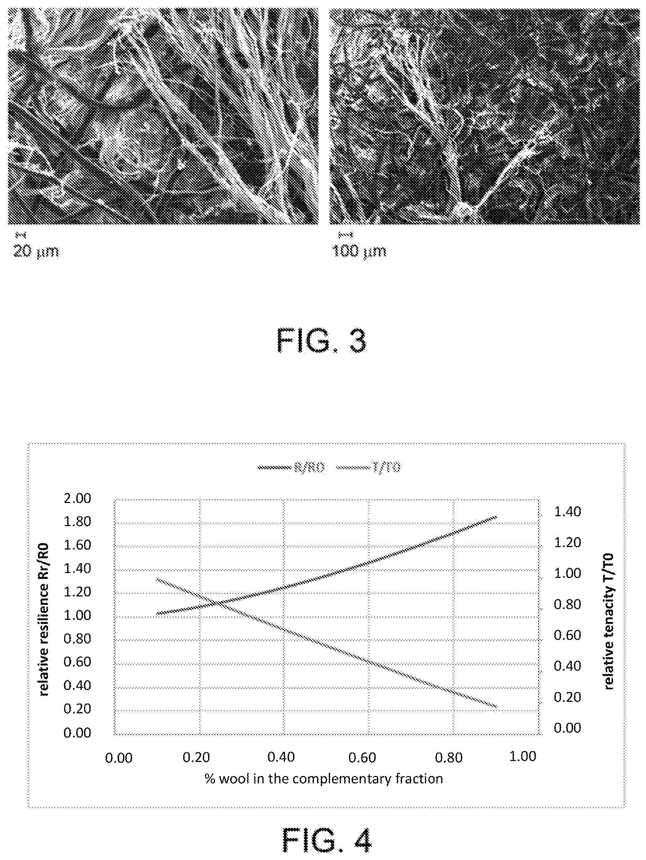

Fig. 3 shows an example of the structure obtained for a blend of 70% recycled leather, 20% wool, and 10% polyester. The figure clearly shows both the fiber weave obtained and its porous structure.

Felts with densities between 0.23 and 0.30 g/cm$^3$ were obtained which, normalized on thicknesses, correspond to felt weights between 500 and 800 g/m$^2$, depending on their composition and the duration of the needling process. Typical thicknesses are between 1 and 3 mm, but higher thicknesses are possible by needling two or more coupled felts. Taking into account the intrinsic density of the starting materials that would lead to density values of the solid part greater than 2.0 g/cm$^3$, the porosity of the felt obtained is between 85% and 90%. It is thus a highly porous structure.

The density of the felt may be increased by about 10% if a hot calendering of the previously obtained felt is carried out.

More generally, it is possible to obtain a felt porosity, defined by the relationship:

$$porosity = (1 - felt\ density/fiber\ density)*100,$$

such that the porosity is greater than or equal to 60%.

One of the relevant product features of an NWF is its resilience, a property that represents the ability of a textile material to regain its initial dimensions after being subjected to even prolonged pressure. This property is accentuated by the presence in NWF of wool fibers that inherently possess it. This property is inherently lower in polyester fibers. However, the latter are able to give NWF greater toughness, i.e. greater resistance to tensile tests.

Fig. 4 indicatively summarizes the trend of the two properties as a function of the percentage of wool in the fiber fraction complementary to the leather fibers (R0 and T0 are the resilience and toughness of NWF with a 10% wool percentage in the fiber fraction complementary to the leather fibers). The content of leather fiber is however higher than 50%, indicatively between 70% and 85%. These trends are obviously based on said needling process, since it is well known that the toughness of NWF is strongly affected by the intensity of this processing step.

Another important feature that wool is able to confer is softness. Leather fibrils exhibit essentially amorphous behavior, as they are deprived of the intrinsic bond they possessed in the original leather. Polyester fibers, especially when subjected to post heat treatment, give rigidity to the structure and therefore show an antithetical behavior compared to those of wool.

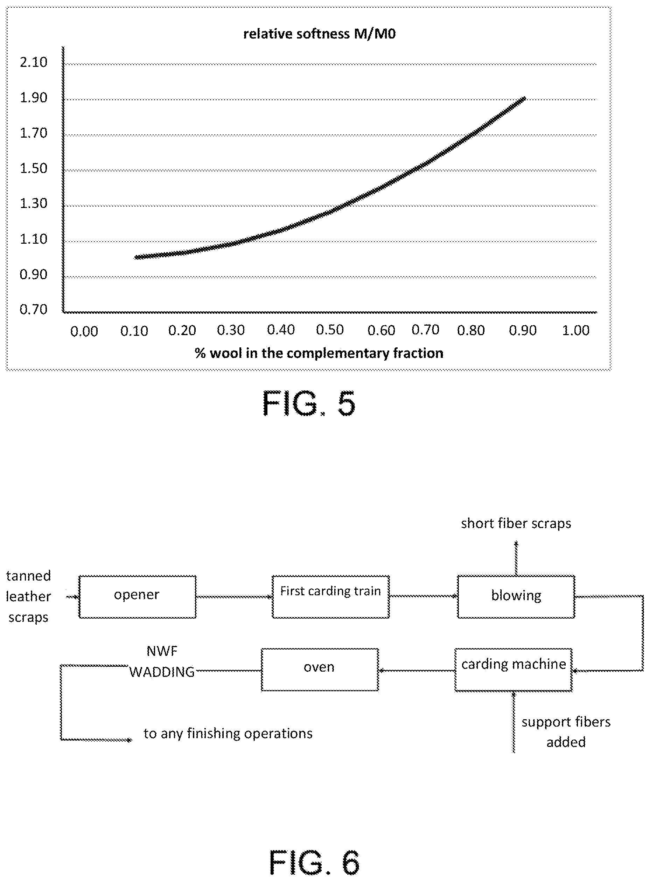

A soft hand is essential in numerous applications in leather goods and also footwear. Therefore the presence of wool in the felt obtained according to the principles of the invention is essential. Fig. 5 shows indicatively the trend of the softness of a felt 1.5 mm thick and subjected to a heat post-treatment at 150°C for 5 minutes as the percentage of wool versus polyester varies (M0 is the softness of the NWF with a wool percentage of 10% in the fiber fraction complementary to the leather fibers). The content of leather fiber is however higher than 50%, indicatively between 70% and 85%. Again, the needling parameters have been kept constant.

Referring to Fig. 6, a schematic of the manufacturing process of a wadding according to the invention is shown. The method is almost identical to that described with reference to Fig. 1, with the difference that the fiber web obtained in the carding phase undergoes consolidation in the oven (without the application of pressure) instead of needling. Heating in an oven causes partial melting of the thermoplastic fibers (polyester or polyamide), the material of which penetrates between the other fibers of the web's mesh. Subsequent cooling of the web then leads to a consolidation of its three-dimensional structure.

**Claims**

**1.** A dry method for manufacturing a non-woven fabric from tanned leather scraps, comprising the following steps:

    providing tanned leather scraps in the form of compact material,
    subjecting the scraps to opening in order to tear the compact material into fiber,
    subjecting the torn material to carding, wherein textile fibers are added to obtain a web of mixed fibers, and
    subjecting the web to needling to obtain a felt, wherein the mixed fiber web is free of impregnating agents and comprises a leather fiber component composed of tanned leather fibers having a diameter of between 4 $\mu$m and 70 $\mu$m and a length of between 4 mm and 20 mm, wherein the leather fiber component is comprised in a weight percentage greater than or equal to 50% of the total weight of the fibers in the fiber web, and preferably between 70% and 80% by weight,
    **characterized in that** the textile fibers are added during carding, said textile fibers including wool fibers.

**2.** The method according to claim 1, wherein said wool fibers are recycled wool fibers.

3. The method according to claim 1 or 2, wherein said textile fibers also include polyester or polyamide fibers.

4. The method according to claim 3, further comprising subjecting the felt to hot calendering.

5. A dry method for manufacturing a non-woven fabric from tanned leather scraps, comprising the following steps:

providing tanned leather scraps in the form of compact material,
subjecting the scraps to opening in order to tear the compact material into fiber,
subjecting the torn material to carding, wherein textile fibers are added to obtain a web of mixed fibers, said textile fibers including polyester or polyamide fibers, and
subjecting the web to heat treatment in an oven to obtain a wadding, wherein the mixed fiber web is free of impregnating agents and comprises a leather fiber component composed of tanned leather fibers having a diameter of between 4 $\mu$m and 70 $\mu$m and a length of between 4 mm and 20 mm, wherein the leather fiber component is comprised in a weight percentage greater than or equal to 50% of the total weight of the fibers in the fiber web, and preferably between 70% and 80% by weight,
**characterized in that** the textile fibers are added during carding, said textile fibers further including wool fibers.

6. The method according to claim 5, wherein said wool fibers are recycled wool fibers.

**Patentansprüche**

1. Trockenverfahren zur Herstellung eines Vliesstoffes aus gegerbtem Lederabfall, umfassend die folgenden Schritte:

Bereitstellen von gegerbtem Lederabfall in Form eines kompakten Materials,
Unterziehen des Abfalls einem Öffnungsvorgang, um das kompakte Material in Fasern zu zerreißen,
Unterziehen des zerrissenen Materials einem Kardenvorgang, bei dem Textilfasern hinzugefügt werden, um ein Gewebe aus gemischten Fasern zu erhalten,
Unterziehen des Gewebes einem Vernadelungsvorgang, um einen Filz zu erhalten, wobei das Gewebe aus gemischten Fasern frei von Imprägniermitteln ist und eine Lederfaserkomponente enthält, die aus gegerbten Lederfasern aufweisend einen Durchmesser zwischen 4 $\mu$m und 70 $\mu$m und eine Länge zwischen 4 mm und 20 mm besteht, wobei die Lederfaserkomponente in einem Gewichtsanteil höher als oder gleich 50 % des Gesamtgewichts der Fasern in dem Fasergewebe und vorzugsweise zwischen 70 % und 80 % des Gewichts vorhanden ist,
**dadurch gekennzeichnet, dass** die Textilfasern während des Kardens hinzugefügt werden, wobei diese Textilfasern Wollfasern enthalten.

2. Verfahren nach Anspruch 1, wobei die Wollfasern recycelte Wollfasern sind.

3. Verfahren nach Anspruch 1 oder 2, wobei die Textilfasern auch Polyester- oder Polyamidfasern umfassen.

4. Verfahren nach Anspruch 3, ferner umfassend das Unterziehen des Filzes einem Heißkalandrierungsvorgang.

5. Trockenverfahren zur Herstellung eines Vliesstoffes aus gegerbtem Lederabfall, umfassend die folgenden Schritte:

Bereitstellen von gegerbtem Lederabfall in Form eines kompakten Materials,
Unterziehen des Abfalls einem Öffnungsvorgang, um das kompakte Material in Fasern zu zerreißen,
Unterziehen des zerrissenen Materials einem Kardenvorgang, bei dem Textilfasern hinzugefügt werden, um ein Gewebe aus gemischten Fasern zu erhalten, wobei diese Textilfasern Polyester- oder Polyamidfasern umfassen, und
Unterziehen dem Gewebe einer Wärmebehandlung in einem Ofen, um eine Watte zu erhalten, wobei das Gewebe aus gemischten Fasern frei von Imprägniermitteln ist und eine Lederfaserkomponente enthält, die aus gegerbten Lederfasern aufweisend einen Durchmesser zwischen 4 $\mu$m und 70 $\mu$m und eine Länge zwischen 4 mm und 20 mm besteht, wobei die Lederfaserkomponente in einem Gewichtsanteil höher als oder gleich 50 % des Gesamtgewichts der Fasern in dem Fasergewebe und vorzugsweise zwischen 70 % und 80 % des Gewichts vorhanden ist,
**dadurch gekennzeichnet, dass** die Textilfasern während des Kardens hinzugefügt werden, wobei diese Textilfasern auch Wollfasern enthalten.

**6.** Verfahren nach Anspruch 5, wobei die Wollfasern recycelte Wollfasern sind.

**Revendications**

**1.** Un procédé à sec pour produire un non-tissé à partir de déchets de cuir tanné, comprenant les étapes suivantes:

fournir des déchets de cuir tanné sous forme de matériau compact,
soumettre les déchets à ouverture afin de déchirer le matériau compact en fibres,
soumettre le matériau déchiré au cardage, dans lequel des fibres textiles sont ajoutées pour obtenir un ruban de fibres mixtes,
soumettre le ruban à un aiguilletage pour obtenir un feutre,
dans lequel le ruban de fibres mixtes est exempt d'agents d'imprégnation et comprend une composante de fibres de cuir composée de fibres de cuir tanné ayant un diamètre compris entre 4 $\mu$m et 70 $\mu$m et une longueur comprise entre 4 mm et 20 mm, ladite composante de fibres de cuir étant comprise dans un pourcentage en poids supérieur ou égal à 50 % du poids total des fibres du ruban de fibres, et de préférence compris entre 70 % et 80 % en poids,
**caractérisé en ce que** les fibres textiles sont ajoutées pendant le cardage, lesdites fibres textiles incluant des fibres de laine.

**2.** Le procédé selon la revendication 1, dans lequel lesdites fibres de laine sont des fibres de laine recyclées.

**3.** Le procédé selon la revendication 1 ou 2, dans lequel lesdites fibres textiles comprennent également des fibres de polyester ou de polyamide.

**4.** Le procédé selon la revendication 3, comprenant en outre une étape de calandrage à chaud du feutre.

**5.** Un procédé à sec pour produire un non-tissé à partir de déchets de cuir tanné, comprenant les étapes suivantes:

fournir des déchets de cuir tanné sous forme de matériau compact,
soumettre les déchets à une ouverture afin de déchirer le matériau compact en fibres,
soumettre le matériau déchiré au cardage, dans lequel des fibres textiles sont ajoutées pour obtenir un ruban de fibres mixtes, lesdites fibres textiles incluant des fibres de polyester ou de polyamide,
soumettre le ruban à un traitement thermique dans un four pour obtenir un ouate, dans lequel le ruban de fibres mixtes est exempt d'agents d'imprégnation et comprend une composante de fibres de cuir composée de fibres de cuir tanné ayant un diamètre compris entre 4 $\mu$m et 70 $\mu$m et une longueur comprise entre 4 mm et 20 mm, dans lequel ladite composante de fibres de cuir est comprise dans un pourcentage en poids supérieur ou égal à 50 % du poids total des fibres du ruban de fibres, et de préférence compris entre 70 % et 80 % en poids,
**caractérisé en ce que** les fibres textiles sont ajoutées pendant le cardage, lesdites fibres textiles incluant également des fibres de laine.

**6.** Le procédé selon la revendication 5, dans lequel lesdites fibres de laine sont des fibres de laine recyclées.

FIG. 1

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102587037
- CN 108691095
- US 2004149369 A1
- US 2015292148 A1
- EP 0089029 A
- CH 573980
- CN 104862983

- CN 105177786
- CN 107574677
- CN 109137258
- US 2543101 A
- FR 2551773
- GB 1302001 A